(19) Europäisches Patentamt / European Patent Office / Office européen des brevets

(11) **EP 2 274 864 B1**

(12) **EUROPEAN PATENT SPECIFICATION**

(45) Date of publication and mention
of the grant of the patent:
**04.12.2013 Bulletin 2013/49**

(21) Application number: **09741852.9**

(22) Date of filing: **04.05.2009**

(51) Int Cl.:
**H04L 5/00** *(2006.01)*          **H04L 27/26** *(2006.01)*

(86) International application number:
**PCT/EP2009/003185**

(87) International publication number:
**WO 2009/135633 (12.11.2009 Gazette 2009/46)**

(54) **AUTOCORRELATION-BASED MULTI-BAND SIGNAL DETECTION**

AUF AUTOKORRELATION BASIERENDE MEHRBANDSIGNALERKENNUNG

DÉTECTION DE SIGNAL MULTI-BANDE PAR AUTO-CORRÉLATION

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **05.05.2008 EP 08008440**

(43) Date of publication of application:
**19.01.2011 Bulletin 2011/03**

(73) Proprietor: **Technische Universität Graz
8010 Graz (AT)**

(72) Inventor: **WITRISAL, Klaus
A-8010 Graz (AT)**

(74) Representative: **Dilg, Haeusler, Schindelmann
Patentanwaltsgesellschaft mbH
Leonrodstrasse 58
80636 München (DE)**

(56) References cited:
- ALEMSEGED Y D ET AL: "Energy detection under narrowband interference in UWB systems" INFORMATION, COMMUNICATIONS&SIGNAL PROCESSING, 2007 6TH INTERNATIONAL CONFERENCE ON, IEEE, PISCATAWAY, NJ, USA, 10 December 2007 (2007-12-10), pages 1-5, XP031229461 ISBN: 978-1-4244-0982-2
- KLAUS WITRISAL: "Noncoherent autocorrelation detection of orthogonal multicarrier UWB signals" ULTRA-WIDEBAND, 2008. ICUWB 2008. IEEE INTERNATIONAL CONFERENCE ON, IEEE, PISCATAWAY, NJ, USA, 10 September 2008 (2008-09-10), pages 161-164, XP031350172 ISBN: 978-1-4244-2216-6

**Description**

The invention relates to a receiver device for detecting a multi-band signal.

Moreover, the invention relates to a method of detecting a multi-band signal.

Furthermore, the invention relates to a communication system.

Beyond this, the invention relates to a program element.

The invention further relates to a computer-readable medium.

Data communication systems become more and more important.

US 7,099,367 discloses the conversion of signals from RF to baseband using transition functions, or edge functions. These functions typically transition from positive to negative, or from negative to positive, synchronously with the transition of the received pulse signal, effecting detection essentially by synchronously rectifying a signal cycle of the received pulse, producing a net signal at baseband that can be further processed to detect modulation according to the modulation format. It is further disclosed how to configure these systems for reception with a filter optimized for a given detect signal function. Generalizations of the matched filter embodiment lead to further embodiments employing alternative detection functions. Also disclosed is a two-stage version which applies a decode signal to the rectified signal. This step can be performed by a single correlator or by a plurality of correlators in parallel. Coding methods are disclosed to employ two-stage systems for enhanced channelization, and interference rejection.

US 2004/0202230 discloses a modulation scheme in UWB communications. This modulation technique utilizes multiple orthogonal transmitted-reference pulses for UWB channelization. A UWB receiver samples the second order statistical function at both zero- and non-zero lags and matches the samples to stored second order statistical functions, thus sampling and matching the shape of second order statistical functions rather than just the shape of the received pulses.

US 2004/0242155 discloses a technique and structure for UWB-TR receivers. The scheme processes an incoming signal to suppress different types of UWB as well as non-UWB interference prior to signal detection. The method and system adds a feedback loop mechanism and samples the second order statistical function such as, for example, the autocorrelation function (ACF) of the received signal and match it to the ACF samples of the original pulses for each transmitted bit.

EP 1 303 056 discloses an ultra-wideband (UWB) communications system combining the techniques of a transmitted reference (TR) and a multiple access scheme called delay hopping (DH). The system uses UWB signaling using a continuous noise transmitted waveform. This TR technique is combined with the DH multiple access technique.

ALEMSEGED Y D et al. describe in an article "Energy detection under narrowband interference in UWB systems" (INFORMATION, COMMUNICATIONS&SIGNAL PROCESSSING, 2007 6th International Conference on, IEEE, Piscataway, NJ, USA) a receiver having a bank of correlators with different short delays to capture and suppress narrowband interference (NBI).

Ultra-wideband (UWB) is a radio technology which can be used at very low energy levels for short-range high-bandwidth communication by using a large portion of the radio spectrum. This method may use pulse coded information with sharp carrier pulses at a bunch of center frequencies in logical connection. UWB has applications in non cooperative radar imaging, target sensor data collection, precision locating and tracking.

A shortcoming of the conventional UWB technology is that the expenditure for forming a signal detector may be very high.

It is an object of the invention to provide a detection system having a sufficiently simple construction.

In order to achieve the object defined above, a receiver device for providing analog frontend processing of a multi-band signal, a communication system, a method of providing analog frontend processing of a multi-band signal, and a program element according to the independent claims are provided.

According to an exemplary embodiment of the invention, a receiver device for detecting a multi-band signal (such as an UWB signal) is provided, the receiver device comprising a bank of autocorrelation units adapted for separating the multi-band signal into a set of autocorrelation signals, and a sampling stage arranged downstream (along a signal propagation path) the bank of autocorrelation units and adapted for sampling the set of autocorrelation signals to thereby select individual signal components for detection.

According to another exemplary embodiment of the invention, a communication system is provided, the communication system comprising a sender device adapted for transmitting a multi-band signal, and a receiver device having the above-mentioned features for receiving and detecting the multi-band signal from the sender device.

According to still another exemplary embodiment of the invention, a method of detecting a multi-band signal is provided, the method comprising separating the multi-band signal into a set of autocorrelation signals by performing an autocorrelation of the multi-band signal by a bank of autocorrelation units, and sampling the set of autocorrelation signals to thereby select individual signal components for detection.

According to still another exemplary embodiment of the invention, a program element (for instance a software routine, in source code or in executable code) is provided, which, when being executed by a processor (such as a microprocessor or a CPU), is adapted to control or carry out a method having the above mentioned features.

According to yet another exemplary embodiment of the invention, a computer-readable medium (for instance a CD, a DVD, a USB stick, a floppy disk or a harddisk) is provided, in which a computer program is stored which, when being executed by a processor (such as a microprocessor or a CPU), is adapted to control or carry out a method having the above mentioned features.

Signal processing which may be performed according to embodiments of the invention can be realized by a computer program, that is by software, or by using one or more special electronic optimization circuits, that is in hardware, or in hybrid form, that is by means of software components and hardware components.

The term "multi-band signal" may particularly denote an electric or electromagnetic signal which comprises different components or sections or portions forming individual (non-overlapping or overlapping) bands which can be transmitted sequentially or simultaneously from a sender to a receiver, wherein the multi-band signal can be separated into individual signals by processing schemes according to exemplary embodiments of the invention.

The term "autocorrelation" may be denoted as a mathematical operation for signal processing for analyzing functions or a series of values. Autocorrelation may be denoted as the strength of a relationship between observations as a function of the time separation between them. More precisely, it may be denoted as a cross-correlation of a signal with itself. Autocorrelation may be implemented for finding repeating patterns in a signal such as determining the presence of a periodic signal which has been buried under noise.

According to an exemplary embodiment of the invention, a receiver (or a transceiver) device may be provided which is capable of detecting a multi-band signal by first performing an autocorrelation function between the multi-band signal and individual copies of the multi-band signal with a certain delay varying among the different signal processing paths. For each delay, a corresponding autocorrelation signal may be generated. By sampling of this set of multiple individual signals, the various signal components may be prepared for subsequent digital processing to thereby provide a digital output including a reconstruction of the content of the detected multi-band signal.

Thus, according to an exemplary embodiment, a receiver for ultra-wideband (UWB) radio signals is provided. The UWB signals may be modulated by on/off key modulation or pulse position modulation on parallel frequency carriers. Parallel multi-carrier modulation may also be denoted as orthogonal frequency division multiplexing (OFDM). The modulation may allow detection by a non-coherent energy detector after selectively filtering out one of the OFDM subcarriers. On/off key modulation (OOK) is a type of modulation that represents digital data as the presence or absence of a carrier wave. The presence of a carrier for a specific duration may represent a binary one, while its absence for the same duration may represent a binary zero. Pulse position modulation is a form of signal modulation in which M message bits are encoded by transmitting a single pulse in one of $2^M$ possible time shifts. This may be repeated every T seconds, such that the transmitted bit rate is M/T bits per second. Pulse position modulation is an M-ary modulation technique that may be implemented non-coherently, such that the receiver does not need to use a phase-locked loop (PLL) to track the phase of the carrier.

Although data communication based on UWB signals has promising features, since for example multi-path propagation has less impact on the receiver performance due to the large signal bandwidth, a precise ranging is possible in multi-path environments based on signal propagation delays which also requires the large signal bandwidth, a conventional drawback of the large signal bandwidth is the resulting huge complexity of conventional digital receivers. Non-coherent receivers, for instance energy detectors, use analog signal processing to de-spread the UWB input signals, which allows to enable low complexity, low power receivers, which is desired for many applications.

According to an exemplary embodiment, an analog receiver front end is provided that is capable of demodulating multi-carrier UWB signals. Each of the so-called subcarriers can carry its own digital information stream, hence the aggregate bit rate multiplies. According to an exemplary embodiment, a bank of analog autocorrelation devices may be used in the receiver frontend to de-spread the multi-carrier UWB signal to a set of narrowband signals. The signals may be sampled at symbol rate and post-processed by a digital signal processor to separate the subcarrier signals.

Such a concept may be significantly preferable over a conventional multi-carrier energy detection scheme with a receiver using a bank of analog filters to filter out the subcarrier signals. Such filters may be followed by conventional energy detectors that typically comprise a square-law device to compute the instantaneous power of the input signal and an integrate and dump circuit to accumulate the signal energy over one symbol interval. With such conventional systems, it may be difficult to implement the analog filters, particularly if the number of carriers exceeds a few (for instance becomes larger than ten). Furthermore, such conventional systems suffer from the fact that production tolerances adversely affect the specifications of integrated analog filters.

In contrast to such conventional approaches, exemplary embodiments of the invention provide a receiver structure which is based on a bank of analog autocorrelation devices instead of analog filters. In an embodiment, each autocorrelation device may comprise a delay element, a multiplier, and an integrate and dump circuit for energy collection. The selection of the subcarrier signals may be performed by sampling and digitally processing the autocorrelator output.

Non-coherent receivers are known to be non-linear. The square law device in the energy detector and the multiplier in the autocorrelation receiver may introduce strong non-linear effects. Therefore, if a sum of input signal arrives at the receiver input, for example the subcarriers of the multi-carrier signal, a mixture of all these input signals arises at the output. This normally renders non-coherent receivers problematic for detecting multi-dimensional and high order digital signals.

A receiver frontend according to an exemplary embodiment of the invention comprises a bank of analog autocorrelation devices instead of highly selective analog frontend filters. Delay elements which may be provided inside the analog frontend, combined with a digital backend processing, may achieve the selective filtering of the input signal to separate the subcarriers. Production tolerances only affect the accuracy of a simple delay instead of a complex analog filter. In fact, such tolerances can be compensated by a digital post-end processing. With respect to a single-carrier UWB system, the multi-carrier scheme according to an exemplary embodiment of the invention allows for high data rates without the need for equalization to suppress inter-symbol interference. Reducing subcarrier bandwidth may also lead to a reduced impact on the channel noise, when non-coherent receivers are used.

Exemplary embodiments of the invention may be used for UWB communication technology with non-coherent detection, for example in an application using UWB to enable (for instance indoor) localization of sensor nodes.

In the following, further exemplary embodiment of the receiver device will be explained. However, these embodiments also apply to the communication system, to the method of detecting a multi-band signal, to the computer-readable medium and to the program element.

The receiver device may be adapted for detecting multi-carrier signals, particularly ultra-wideband (UWB) multi-carrier signals. Such signals may be capable of transporting a large amount of information, thereby allowing to provide a high bandwidth in combination with a simple construction.

The multi-carrier signal may be modulated by on/off key modulation or may be modulated by pulse position modulation on parallel frequency carriers.

The bank of autocorrelation units may be an analog bank of autocorrelation units. It may be particularly advantageous to perform the autocorrelation in the analog domain, wherein a conversion into a digital signal may be performed afterwards.

The autocorrelation/sampling signal paths may be connected in parallel to one another. That may mean that the bank of autocorrelation units and the sampling stage may be connected as a plurality of signal branches which are connected in parallel to one another. Each of the autocorrelation units may be supplied, as an input, with the multi-band signal and may perform an autocorrelation of this signal with a specific time delayed signal, wherein the time delay may be different for the different autocorrelation units connected in parallel. By this architecture, different components of the multi-band signal may be sampled and can therefore be reconstructed without the need of complex filters.

The bank of autocorrelation units may be adapted as a non-coherent frontend receiver part, in particular for energy detection. The implementation of analog autocorrelation units may allow to prevent a complex coherent detection mechanism and may allow to perform a detection in the energy domain, significantly simplifying the construction of the circuit.

According to an exemplary embodiment, each of the autocorrelation units may comprise a delay unit adapted for delaying the multi-band signal by a predefined delay time, and a mixing unit, particularly a multiplier unit, adapted for mixing the delayed multi-band signal with the non-delayed or undelayed multi-band signal. Such an architecture allows for an easy separation of the individual signal components while keeping the computational burden at a reasonable level.

The predefined time delay or delay time may differ for different ones of the autocorrelation units. For example, the delay of each two subsequent branches of the circuitry may have a constant difference. For example, the delay in each branch of the circuitry may be constant so as to be sensitive to a specific point or portion of the autocorrelation function. Such a delay unit may be realized by a ceramics member, by an extended (ohmic) line length, etc.

At least a part of the autocorrelation units may comprise a frequency down converter, particularly arranged upstream (along a signal propagation path) the delay unit and upstream (along a signal propagation path) the mixing unit, adapted for converting the multi-band signal down to a baseband. Such an optional frequency down converter may contribute to a precise separation of the signal into a portions thereof. A (for instance radio) frequency down converter may be denoted as a device that takes an input of radio frequency energy of a specific frequency range and outputs it on a lower frequency.

At least a part of the autocorrelation units may comprise an integrate and dump (I&D) unit, particularly arranged downstream (along a signal propagation path) the delay unit and downstream (along a signal propagation path) the mixing unit. Such an integrate and dump unit may be a component for calculating power/energy. It may be realized as a capacitor which can be charged for instance via a switch so that the accumulated charge may be a measure for the energy, and may therefore include information indicative of signal content. An integrate and dump member may also be realized as an integrator with an operation amplifier.

The sampling stage may be adapted for sampling the set of autocorrelation signals synchronously. By such a parallel processing of individual signal parts, a fast processing and detecting may be obtained.

The receiver device may comprise a digital signal processing unit (DSP) arranged downstream (along a signal propagation path) the sampling stage and adapted for separating the set of autocorrelation signals. By such a digital signal processing unit, an analog output of the previous stages may be converted into a digital output.

The digital signal processing unit may comprise a Fourier transformation section adapted for Fourier transforming the set of autocorrelation signals. A Fourier transform is a specific form of Fourier analysis and transforms one function into another, which may be the frequency domain representation of the original function. The Fourier transform section may be adapted specifically for Fourier transforming the set of autocorrelation signals to a power density spectrum of the multi-band signal. This allows for an efficient recovery of the signal content.

The Fourier transformation section may be particularly adapted for Fourier transforming the set of autocorrelation signals to reconstruct a content of the multi-band signal in the time domain or in the frequency domain. Thus, a non-coherent detection may be made possible.

The digital signal processing unit may comprise an analog to digital converter (ADC) section adapted for converting the set of autocorrelation signals into digital signals. Thus, an analog receiver frontend having an autocorrelation feature and a sampling function may be combined with a digital processing function in which an ADC conversion takes place so that an output of the receiver device is digital.

The receiver device may comprise a multi-band signal reception unit, particularly an antenna, adapted for receiving the multi-band signal and for supplying the received multi-band signal to the bank of autocorrelation units. Thus, the multi-band signal may be received in a wireless manner (for instance as an RF signal) or in a wired manner (for instance transmitted via a cable connection). The multi-band reception unit may be adapted for receiving the multi-band in a wireless or in a wired manner.

In the following, further exemplary embodiments of the communication system will be explained. However, these embodiments also apply to the receiver device, the method, the computer-readable medium and the program element.

The communication system may be applied in different technical fields. According to one embodiment, the communication system may serve as a sensor network having a plurality of individual sensors which communicate, for instance in a wireless manner, sensor data to a central receiver device. It is also possible that the communication system is adapted as a wireless data communication system, for instance forms a computer network. According to another exemplary embodiment, the communication system may be a USB (Universal Serial Bus) data communication system enabling wireless communication between an USB port and an environment.

The communication system may comprise a plurality of sender devices each adapted for transmitting a single-band signal, wherein different ones of the plurality of sender devices are adapted to operate via different carrier frequency values, wherein the receiver device is adapted for separating the single-band signals.

According to an exemplary embodiment of the invention, a digital information transmission system may be provided which may be implemented in UWB technology to thereby achieve a large bandwidth. UWB signals may be processed with reasonable effort by a non-coherent detection mechanism, i.e. a detection mechanism in which only the energy of the signal is evaluated, not the phase. In other words, not the entire impulse response is evaluated. In contrast to conventional non-coherent receivers, exemplary embodiments of the invention are less prone to failure which may be achieved by substituting a conventional bank of small band selective filters by a set of autocorrelation functions. Discrete samples of an autocorrelation function may be determined. A Fourier transformation may be performed in order to recover frequency information from energy information. A power density spectrum may be denoted as the energy/power as a function of the frequency.

According to an embodiment, different frequency values or bands of one signal may be decoded/separated simultaneously instead of a multi-carrier signal. According to a further alternative, no strict separation has to be performed in the frequency domain, but it is also possible to have overlapping frequency ranges in different signal processing paths.

According to an exemplary embodiment, a non-coherent detection of multi-carrier UWB signals may be provided, for instance in the context of a wireless data transmission system several autocorrelation receivers with different delay time may be connected in parallel without the provision of highly selective bandpass filters between antenna and receiver. The autocorrelation may provide information about the energy content of the individual subcarriers of the signal. Using a simple discrete Fourier transformation allows to separate the subcarriers. The number of the detected carriers may be proportional to the number of the autocorrelators, so that noise may be reduced by the reduced subcarrier bandwidth.

By providing non-coherent energy detectors, no expensive analog filters are required having tolerances which influence the UWB transmission. No high clock sampling is required, for instance it may be sufficient to provide one sample per symbol.

The communication between different components of the device or between the device and further devices may be carried out in a wired manner (for instance using a cable) or in a wireless manner (for instance via a WLAN, infrared communication or Bluetooth).

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.

Fig. 1 illustrates a receiver system according to an exemplary embodiment of the invention.
Fig. 2 illustrates a configuration of an autocorrelation unit of the receiver system of Fig. 1.
Fig. 3 illustrates a power spectral density of a multi-carrier UWB signal.
Fig. 4 illustrates a performance of an N+1=9 carrier UWB OFDM system using L=10 AcR channels with a subcarrier spacing of 100 MHz.
Fig. 5 illustrates a performance of an N+1=9 carrier UWB OFDM system using L=10 AcR channels with a subcarrier spacing of 500 MHz.
Fig. 6 illustrates a communication system according to an exemplary embodiment of the invention.

The illustration in the drawing is schematically. In different drawings, similar or identical elements are provided with the same reference signs.

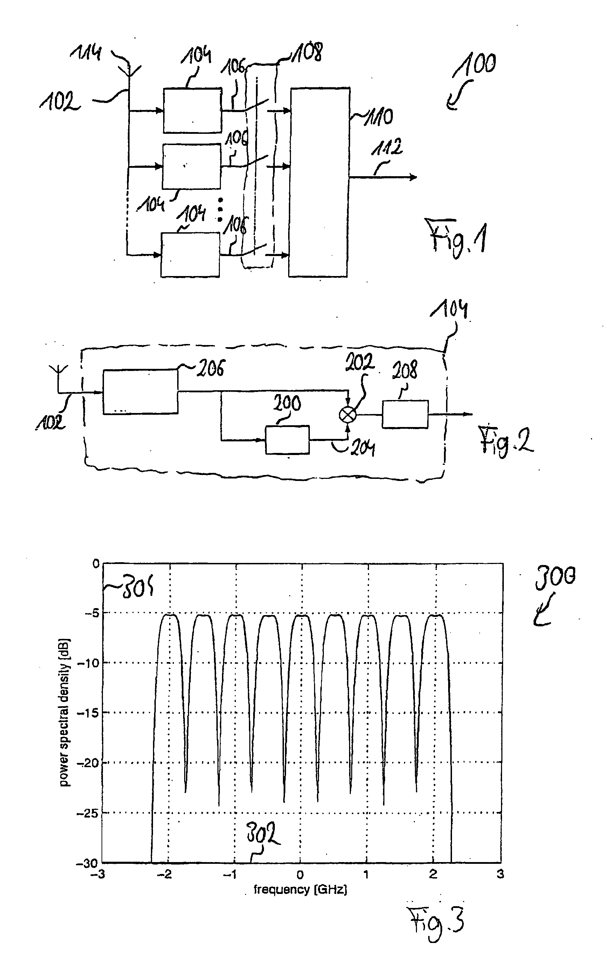

In the following, referring to Fig. 1, a receiver device 100 for detecting a multicarrier ultra-wideband (UWB) signal 102 according to an exemplary embodiment of the invention will be explained.

The receiver device 100 comprises an antenna 114 adapted for a wireless reception of the UWB signal 102 and for supplying the received UWB signal 102 to a bank of autocorrelation units 104.

The bank of analog autocorrelation units 104 can be denoted as a non-coherent frontend receiver part adapted for separating the multi-band signal 102 into a set of autocorrelation signals 106, wherein each of the set of autocorrelation signals 106 is assigned to a corresponding one of the bank of autocorrelation units 104 and represents a dedicated part of the UWB signal 102.

A sampling stage 108 is arranged downstream the bank of autocorrelation units 104 (i.e. is supplied with the output 106 of the bank of autocorrelation units 104) and is adapted for sampling the set of autocorrelation signals 106 to thereby select individual signal components for detection. The sampling stage 108 comprises a plurality of switch elements (such as transistor switches) controlled with a control signal to thereby control a sampling performance. A single switch element is assigned to each individual one of the bank of autocorrelation units 104. The sampling stage 108 is adapted for sampling the set of autocorrelation signals 106 synchronously.

Thus, a parallel signal processing architecture is achieved in which the bank of autocorrelation units 104 and the sampling stage 108 are connected as a plurality of signal processing branches (see parallel paths between reference numeral 102 and reference numeral 110) which are connected in parallel to one another.

A digital signal processing unit 110 is arranged downstream the sampling stage 108 and is adapted for separating the set of autocorrelation signals 106. The digital signal processing unit 110 comprises a Fourier transformation section (not shown) adapted for Fourier transforming the set of autocorrelation signals 106. The Fourier transformation section is adapted for Fourier transforming a power spectral density of the set of autocorrelation signals 106 to reconstruct the content of the multi-band signal 102 (time domain/frequency domain).

The digital signal processing unit 110 further comprises an analog to digital converter (ADC) section (not shown) adapted for converting the set of analog autocorrelation signals 106 into digital signals 112.

The embodiment of Fig. 1 allows for a non-coherent detection of multi-carrier UWB signals. As illustrated in Fig. 1, the bank of parallel autocorrelation devices 104, whose outputs 106 are sampled synchronously, comprises the non-coherent receiver frontend suitable for separating the multi-carrier UWB signal 102. The digital signal processing unit 110 is adapted for finally separating the subcarrier signals. Thus, Fig. 1 shows a circuitry of a bank of autocorrelation units 104 with a backend signal processor 110 which constitute the non-coherent detector. The number of autocorrelation units 104 may be larger than 2, particularly may be larger than 5, more particularly may be larger than 10.

The DSP unit 110 is adapted for transferring or transforming the signals 106 from the domain obtained by the autocorrelation (delay time) into the domain of the frequency by a Fourier transformation. For this purpose, it may be appropriate to apply a multiplicative windowing function on the set of autocorrelation signals. A processing scheme applied may also be a more generic form of (in particular linear) processing to orthogonalize the components of the multi-carrier signal.

Thus, as an alternative to a Fourier transformation, it is possible according to other exemplary embodiments of the invention, to perform any other (particularly linear) signal processing schemes for orthogonalizing the signal components. It is, for instance, possible to perform signal processing in a similar manner as in MIMO systems(particularly linear signal transformation). However, a Fourier transformation may be a preferred embodiment, since it yields results which are believed to be close to an ideal solution. Particular in combination with a Fourier transformation, it is possible to employ windowing.

**Fig. 2** shows a block diagram of one branch of the receiver frontend of Fig. 1, and thus of the internal constitution of one of the autocorrelation units 104.

Each of the autocorrelation units 104 comprises a delay unit 200 adapted for delaying the UWB signal 102 by a predefined delay time (for instance of several nanoseconds). A typical signal delay provided by the delay unit 200 may be in the order of magnitude between 0.1 ns and 100 ns, particularly between 1 ns and 5 ns. In an embodiment, the bandwidth-delay product may be 5-10.

A mixing unit 202, in the present embodiment a multiplicator, is provided with two inputs and one output representing the multiplication of the signals supplied to the two inputs and adapted for mixing the delayed multi-band signal 204 provided at a first one of the two inputs with the non-delayed multi-band signal 102 provided at a second one of the two inputs. The predefined time delay differs for different ones of the autocorrelation units 104 of Fig. 1. In other words, each pair of two different ones of the autocorrelation units 104 have a different time delay. By taking this measure, each of the autocorrelation units 104 is sensitive to a different signal portion of the multi-carrier UWB signal 102.

Each of the autocorrelation units 104 comprises an optional frequency down converter 206 (which may be omitted in other embodiments), arranged upstream the delay unit 200 and upstream the mixing unit 202 and adapted for converting the multi-band signal 102 down to a baseband. The frequency down conversion unit 206 takes the multi-band signal 102 and mixes it down to a baseband.

Each of the autocorrelation units 104 further comprises an integrate and dump (I&D) unit 208, particularly arranged downstream the delay unit 200 and downstream the mixing unit 202. An integrate and dump block 208 may create a cumulative sum of the input signal, while resetting the sum according to a fixed schedule.

**Fig. 3** shows a diagram 300 having an abscissa 302 along which a frequency is plotted in GHz. Along an ordinate 304, a power spectral density is plotted in dB. A graph shown in the diagram 300 indicates the power spectral density of the multi-carrier UWB signal 102, wherein the modulation signals of 9 parallel subcarrier signals can be distinguished. The subcarrier spacing is 500 MHz.

According to an exemplary embodiment, a UWB (ultra-wideband) OFDM (Orthogonal Frequency Division Multiplex) system with non-coherent autocorrelation detection may be provided.

An embodiment of the invention provides a UWB multi-carrier modulation scheme which enables detection through a non-coherent multi-channel autocorrelation receiver (AcR) frontend. The receiver detects the energy of the subcarrier signals. Hence, on/off keying (OOK) or pulse position modulation (PPM) can be used as modulation schemes at the subcarrier level. A set of $L' \geq (N+1)/2$ parallel (complex baseband) AcR channels may be used to separate $N+1$ subcarrier signals. Liner post-processing enables separation of the subcarrier signals. A discrete Fourier transform can be used, but an inversion of the linear channel matrix may also yield proper performance and may be employed, according to an embodiment of the invention, as an alternative linear processing scheme. Surprisingly, non-linear cross products remain limited, such that the performance loss may be only around 1 dB or less, in a 9 channel system using 5 AcR entities, compared with a significantly more complex energy detector using highly selective sub-channel filters.

In the following, some basic recognitions of the present inventor will be explained based on which exemplary embodiments of the invention have been developed.

Embodiments of the invention relate to non-coherent energy detection for UWB systems, where an analog frontend de-spreads the UWB signal down to slow, symbol rate samples used for the data detection. Instead of a square law device and integrate and dump circuit used in a conventional energy detector, a multi-channel AcR with a set of (short) delays $\{D_1\}$ may be implemented. Such a frontend can be used to efficiently mitigate narrowband interference (NBI) that might impair the received signal. An AcR with a delay shorter than a pulse duration may be suitable for energy detection and yields side information on the frequency of an input signal.

An embodiment of the invention relates to a multi-channel AcR in a scenario in which multiple input signals are simultaneously present at different carrier frequencies. The non-linear cross-term among the input signals can be (largely) avoided, if the received signals are orthogonal. This allows separation of (orthogonal) frequency division multiplexed (OFDM) subcarrier signals by applying linear multi-input multi-output (MIMO) detectors. An appropriate frontend design allows using a predefined detector based on the discrete Fourier transform (DFT), thus a low complexity implementation is feasible, while advanced backend processing allows performance improvements. Embodiments of the invention may allow for a simple construction since complex frontend filters may be avoided.

In the following, a system model according to an exemplary embodiment of the invention will be explained.

Next, mathematical models of the signalling scheme and the receiver frontend will be discussed.

A UWB system will be modelled in the complex equivalent baseband. Inter-symbol interference may be avoided through a guard interval. Therefore, without loss of generality, a single symbol period may be considered. The transmitted signal may be written as

$$s(t) = w(t) \sum_{n=-N/2}^{N/2} s_n e^{j2\pi n f_c t} \qquad (1)$$

where w(t) is a transmitter pulse shape used for a spectral shaping of the subcarrier signals, $S_n \in \{0,1\}$ are OOK symbols on subcarriers n=-N/2, -N/2+1,..., N/2, and $f_c$ is the frequency spacing of the subcarriers. Hence, the number of subcarriers is N+1. Two consecutive such symbols are needed to represent binary PPM. An inverse DFT can be used to generate such a signal as in a conventional OFDM scheme. The time extent of the transmit pulse w(t) may be short compared with the symbol interval, to generate an impulsive UWB signal.

The signal according to equation (1) is linearly convolved with the impulse responses of the antennae, the multipath channel h(t), and the receiver frontend filter $f_{rx}$(t). Gaussian noise (AWGN) is added. Assuming synchronization, the received signal may thus be written as

$$r(t) = \sum_n s_n g_n(t) e^{j2\pi n f_c t} + v(t) \qquad (2)$$

where $g_n(t)=[h(t)e^{-j2\pi n f_c t}]*w(t)$ is the complex envelope of the UWB channel response to a transmitted UWB pulse w(t) at time t=0 and a frequency $nf_c$. The filtered noise signal v(t) has the autocorrelation function (ACF) $R_{vv}(\tau)=N_0\Phi_f(\tau)$, where No is the noise power spectral density (PSD) at the receiver input and $\Phi_f(\tau)=f_{rx}(\tau)*f_{rx}(-\tau)$ is the ACF of the frontend filter. The equivalent bandwidth of the frontend may be defined as $W_{rx}=\Phi_f(0)$, such that the noise power $R_{vv}(0)=N_0 W_{rx}$.

The received signal is applied to a bank of L parallel AcR channels at delay lags $\{D_l\}$, l=1,2,...,L, to produce L parallel output samples $y(D_l)$. One AcR channel may be written as

$$y(D_l) = \int_0^{T_l} r(t)r^*(t+D_l)dt \qquad (3)$$

$$= \langle \Pi_{T_l}(t)r(t), r(t+D_l) \rangle \qquad (4)$$

introducing the notation <x(t), y(t)> for the inner product $\int_{-\infty}^{\infty} x(t)y^*(t)dt$ of two signals, and the function $\Pi_{T_l}(t)$ to define a unit-magnitude rectangular pulse over the interval [0,$T_l$]. For $D_l$=0, equation (3) is equivalent to a conventional energy detector, comprising a square law device and integrate and dump.

In the following, receiver signal processing will be explained in further detail. This includes an analysis of the receiver output and a discussion of backend processing steps to separate the subcarrier signals.

In this context, the analog AcR processing will be analyzed in detail, to demonstrate how the output samples according to equation (3) can be used to separate the subcarrier signals in equation (2). Furthermore, design choices for the pulse shape w(t), subcarrier spacing $f_c$ and other system parameters will be discussed.

Next, receiver frontend analysis will be described.

A non-linear autocorrelation operation performed by equation (3) introduces cross products between any pair of input signals. Hence, it comprises $(N+2)^2$ cross-terms (accounting for the noise signal and N + 1 subcarriers). The inner product notation according to equation (4) will be considered, and the following "basis functions" will be introduced:

$$\psi_n(t) = \Pi_{T_l}(t)g_n(t)e^{j2\pi n f_c t} \qquad (5)$$

$$\tilde{\psi}_n(t+D_l) = \Pi_{T_l}(t)g_n(t+D_l)e^{j2\pi n f_c(t+D_l)} \qquad (6)$$

Using these notations, it is possible to express the cross-products as:

$$y(D_l) = \sum_n s_n < \psi_n(t), \sum_{n'} s_{n'} \tilde{\psi}_{n'}(t + D_l) >_I$$

$$+ \sum_n s_n < \psi_n(t), v(t + D_l) >_{II}$$

$$+ \sum_n s_n < \tilde{\psi}_n(t + D_l), v(t) > *_{III}$$

$$+ < v(t), v(t + D_l) >_{IV} \qquad (7)$$

Expanding the summations will result in $(N+2)^2$ inner product terms. However, assuming that several subcarriers signals are separated in frequency, the waveforms $\psi_n(t)$ and $\psi_{n'}(t+D_l)$ are orthogonal for $n \neq n'$, and then it is possible to rewrite

$$y(D_l) = \sum_n s_n^2 h_n(D_l) + s_n v_n(D_l) + s_n \tilde{v}_n(D_l) + v_v(D_l) \qquad (8)$$

which is a linear sum of data-dependent signal by signal coterms, , $s_n^2 h_n(D_l) = s_n^2 < \psi_n(t), \tilde{\psi}_n(t + D_l) >$ , as seen from part (I) of equation (7), signal by noise crossterms, see parts (II) and (III) of equation (7), and a noise-by-noise coterm, see part (IV) of equation (7).

This shows that non-linear cross-terms between subcarrier signals can be avoided by properly choosing the pulse shape w(t) and the subcarrier spacing $f_c$. But how does the non-linear frontend operation influence the signal by noise cross-terms. This will be discussed next.

Equation (7) shows that the cross-terms (II), $v_n(D_l)$ can be seen as a projection of the noise signals $v(t + D_l)$ onto the basis function $\psi_n(t)$. Now assuming a method of linearly processing a set of samples {y(D_l)} that achieves orthogonalization of the subcarrier terms $s_n^2 h_n(D_l)$ is devised. It follows from the linearity of the operations and the projections in equation (7) that such processing will also separate the signal by noise cross-terms (II), $s_n v_n(D_l)$. The same holds approximately for the cross-terms (III), $s_n \tilde{v}_n(D_l)$, because $\tilde{\psi}_n(t)$ differs from $\psi_n(t)$ only by a shift D, in the time window. This shift may be chosen much shorter than the integration window. In other words, $D_l << T_l$, hence $\tilde{v}_n(D_l) \approx \langle \psi_n(t), v(t-D_l) \rangle *$. This explains that the linear MIMO detector can also separate the non-linear signal by noise cross-terms. Hence, separation of multiple input signals can be achieved with a multi-channel AcR frontend, if the input signals are non-overlapping in the frequency domain.

Next, backend signal processing will be explained.

Stacking the samples, $\{y(D_l)\}^L_{l=1}$ in a vector y, the data symbols $S_n^2$ in vector s, and all noise samples in vector v, the linear MIMO signal model is obtained:

$$y = Hs + v \qquad (9)$$

wherein the elements of H are $[H]_{l,n} = h_n(D_l)$ for l=1,..., L and n=-N/2,...,N/2. It is easily verified that

$$h_n(D_l) = I_g^{(n)}(0, T_l; D_l)e^{-j2\pi f_c D_l} \qquad (10)$$

where $I_q^{(n)}(0, T_I; \tau) = \int_0^{T_I} g_n(t) g^*{}_n(t+\tau) dt$ is the ACF of the complex envelope of the received pulse, the RP-ACF.

Assume the delays $\{D_I\}$ are chosen shorter than the coherent time of the received pulse envelope. Then, $I_g^{(n)}(0, T_I; D_I)$ approximately yields the energy of the subcarrier pulse, while the complex exponential introduces a phase shift proportional to $D_I$ and the subcarrier frequency $nf_c$. Using this assumption, it is possible to write the multi-channel data model according to equation (9) as

$$y \approx WEs + v \qquad (11)$$

wherein matrix W: LxN contains the phase terms $e^{-j2\pi nf_c D_I}$ and E:NxN is a diagonal matrix of subcarrier pulse energies. An inversion of the equation (11) yields an estimate of the data vector, $s = W^+ y$, whose elements are proportional to the captured energies of the data symbols. By choice of delays $\{D_I\}$ W can be made orthogonal such that $W^+ = W^H$ which corresponds to the DFT operation. That is, the separation of the multi-carrier (MC) signals is based on the phase terms and its performance is determined by random variations of these phase terms that occur due to multi-path propagation. The smaller $D_I$ with respect to the bandwidth reciprocal of the subcarrier signals, the better this approximation holds.

An orthogonal matrix W is obtained, if the delay lags $D_I$, $I=1,2,...,L$ are incremented in steps of $1/(Lf_c)$. A choice of symmetric pairs $D_I = \pm D$ will minimize the $D_I$. That is, it is possible to define $D_I = [I-(L+1)/2]/(Lf_c)$ and it is required that $L \geq N+1$ to orthogonalize $N+1$ subcarriers. Hence the maximum delay lag is $D_L \approx 1/(2f_c)$ which is seen to be determined by the subcarrier spacing $f_c$ that is itself related to the subcarrier bandwidth. The width of the main lobe of the pulse ACF is in the order of the bandwidth reciprocal of the pulse, $1/f_c \approx 2D_L$, hence considerable power output can be expected at these correlation lags. A thorough analysis of the mean and variance of the RP-ACF can be used to accurately evaluate the output power. The variance decreases with increased bandwidth. Therefore, the approximation (11) becomes more accurate if the subcarrier bandwidth is more in the UWB regime. The maximum delay bandwidth product of the AcR delays is $\approx D_L(N+1)f_c \approx (N+1)/2$, i.e. it is determined by the number of subcarriers N.

Except for slightly shifted integration intervals, $y(D_I) = y^*(-D_I)$. Exploiting the symmetry, it is sufficient to implement $L' = [L/2]$ complex valued AcR channels to separate $N+1$ subcarrier signals, where $L \geq N+1$. This means that as little as one real valued sample per subcarrier per symbol is sufficient to detect the MC signal. Extending the number of AcR channels beyond this number increases a frequency resolution, such that DFT windowing can be applied without introducing inter-carrier interference.

Next, noise analysis will be explained.

The assumption is only approximately true, that the signal by noise cross-terms (II) and (III) of equation (7) are collinear (in the signal space spanned by the AcR outputs). In practice, some crosstalk arises from the signal by noise cross-terms of adjacent subcarrier, which may lead to a signal-to-noise-ratio degradation. The statistical analysis of this crosstalk shows the influence of system parameters as the pulse shape w(t) and the number of subcarriers, and might thus be used for system optimization.

The same holds for the statistics of the noise by noise product samples, the terms $v_v(D_I)$ in equation (8). It turns out that a spacing of the delay lags at multiples of the system bandwidth reciprocal, $1/W_{rx}$, ensures uncorrelated noise by noise product samples. This condition can be matched with the requirement for an orthogonal W.

The noise statistics can also be exploited for a performance enhancement of the MIMO receiver. The minimum mean square error (MMSE) principle can be applied for instance to consider noise cross-correlations among AcR channels.

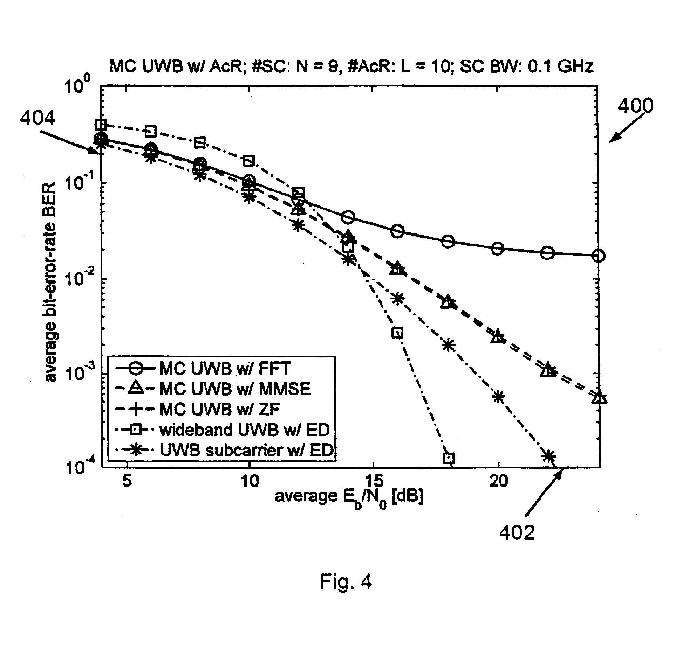

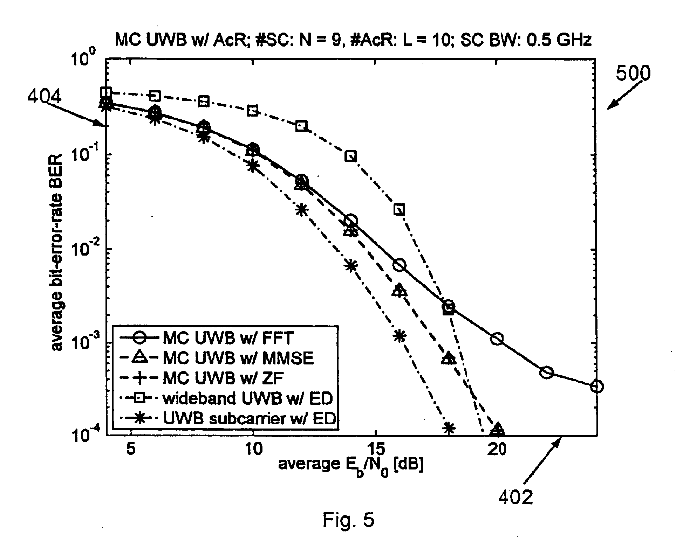

Performance results are depicted in Fig. 4 and Fig. 5 for systems with aggregate bandwidth of about 1 GHz and 5 GHz, respectively.

**Fig. 4** shows a diagram 400 having an abscissa 402 along which a performance is plotted in dB. Along an ordinate 404, an average bit error rate is plotted. The subcarrier spacing in Fig. 4 is 100 MHz.

**Fig. 5** shows a corresponding diagram 500 for a subcarrier spacing of 500 MHz.

As can be taken from Fig. 4 and Fig. 5, both OFDM systems use $N+1=9$ subcarriers spaced by $f_c=100$ MHz and $f_c=500$ MHz, respectively. A root raised cosine pulse shape was used for w(t) with a roll off factor of 0.5 and an absolute bandwidth equal to the subcarrier spacing, such that adjacent carriers truly do not overlap in frequency. The system employs PPM, which allows using a zero threshold for data detection. A simulated channel with a root mean square delay spread of 10 ns has been considered.

The performance of the MC UWB system is depicted for three different backend processing schemes. The solid lines in Fig. 4 and Fig. 5 illustrate the receiver using the orthogonal W matrix for separating the subcarrier signals, the DFT solution. A perfectly known channel matrix H has been assumed for the two other receivers, which employ the pseudo inverse of H in case of the zero forcing (ZF) solution, and an MMSE combiner with an estimated noise co-variance matrix. The latter two receivers perform equally, which indicates that the noise samples are indeed uncorrelated or collinear. The DFT receiver falls behind these benchmarks, due to the impact of random multi-path. As explained above, this effect is expected to reduce at higher bandwidth, which is confirmed by the simulation results. The loss remains below 1 dB for the 500 MHz subcarrier bandwidth system, at BER values down to 1 %, while the 100 MHz system shows an error floor at about this BER level.

Two additional benchmark results are depicted by dash dotted lines in Fig. 4 and Fig. 5. Marked by "*" is a conventional energy detector, which is a highly selective filter matched to the spectrum of the subcarrier signals. The best MC system loses about 1 dB to 1,5 dB compared with this benchmark, at BER values down to 1 %. This is due to the boosted power of the noise by noise co-term resulting from the bandwidth extension, which is not entirely compensated by the combined signal power from the parallel AcR channels, and due to residual non-linear signal by noise crosstalk. A thorough analysis of the signal and noise statistics may be performed to fully evaluate the impact of the various aspects.

The benchmark result marked by squares stands for a single carrier  UWB system employing the full signal bandwidth. Such a system performs considerably worse in terms of $E_b/N_0$, due to the boosted noise by noise component. However, the slopes of these BER curves are much steeper, because a multi-path fading is much better resolved. Forward error correction will be able to similarly exploit the full frequency diversity in the MC system, employing coding across subcarriers.

According to an exemplary embodiment of the invention, a multi-channel AcR frontend is provided for non-coherent detection of a multi-carrier (OFDM) UWB system employing for instance OOK or PPM signalling. Only about one sample per symbol per subcarrier may be acquired at the receiver (for OOK). Simple DFT processing can separate the subcarrier signals. Advantages are that the data rate is increased proportionally to the number of subcarriers and, due to the reduced subcarrier bandwidth, the non-linear noise by noise co-term may be significantly reduced. Thus, a significant enhancement in data rate and performance may be obtained at only a very moderate cost of additional circuitry or calculation expense.

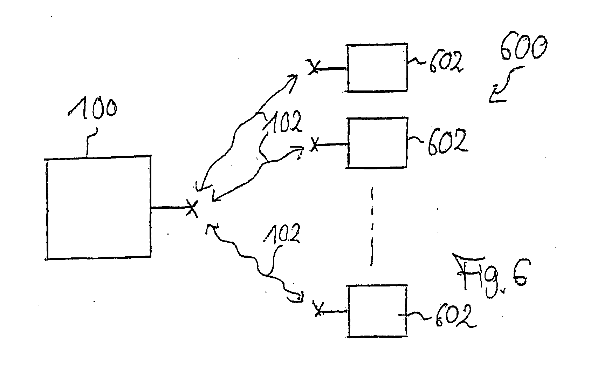

Fig. 6 illustrates a sensor communication system 600 according to an exemplary embodiment of the invention.

The sensor communication system 600 comprises a plurality of sensor devices 602 each representing a specific sensor. For example, a temperature sensor, a pressure sensor, a humidity sensor, etc. may be provided in a distributed sensor system monitoring a technical apparatus or installation. The corresponding sensor signals each indicative of a value of a sensor parameter to be sensed may be transmitted via a wireless communication interface of the sensor devices 602 as multi-band UWB signals 102 to a receiver device 100 constituted as shown in Fig. 1 and being capable of decoding the sensor information included in the transmitted signals 102. For this purpose, the transmitted signals 102 are captured by a wireless communication interface of the receiver device 100 (such as the antenna 114) and is processed in a manner as explained above referring to Fig. 1 and Fig. 2.

In system 600, the nodes 602 may transmit single-band signals via different carrier frequencies (thus, conventional FDM). The receiver device 100 serves for separating these FDM signals.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

**Claims**

1.  A receiver device (100) for providing analog frontend processing of a multi-band signal (102) in the form of a multi-carrier signal which is a signal on multiple orthogonal, frequency division multiplexed carriers, the receiver device (100) comprising

    a bank of autocorrelation units (104) adapted for separating the multi-band signal (102) into a set of autocorrelation signals (106);
    a multi-band signal reception unit (114) adapted for receiving the multi-band signal (102) and for supplying the received multi-band signal (102) to the bank of autocorrelation units (104);
    a sampling stage (108) arranged downstream the bank of autocorrelation units (104) and adapted for sampling the set of autocorrelation signals (106) to thereby select individual signal components for detection,
    wherein the bank of autocorrelation units (104) is adapted as a non-coherent frontend receiver part;
    wherein each of the autocorrelation units (104) comprises
    a delay unit (200) adapted for delaying the multi-band signal (102) by a predefined delay time;

a mixing unit (202), particularly a multiplication unit, adapted for mixing the delayed multi-band signal (204) with the undelayed multi-band signal (102); and

wherein the predefined delay time differs for different ones of the autocorrelation units (104);

wherein the number of orthogonal frequency carriers is N+1, and the number of autocorrelation units is at least (N+1)/2;

wherein the multi-carrier signal (102) is modulated by on/off key modulation or

wherein the multi-carrier signal (102) is modulated by pulse position modulation on parallel frequency carriers.

2. The receiver device (100) according to claim 1, adapted for detecting an ultra-wideband signal.

3. The receiver device (100) according to claim 1 or any one of the above claims, wherein the bank of autocorrelation units (104) and the sampling stage (108) are connected as a plurality of signal processing branches which are connected in parallel to one another.

4. The receiver device (100) according to claim 1 or any one of the above claims, wherein at least a part of the autocorrelation units (104) comprises a frequency down converter (206), particularly arranged upstream the delay unit (200) and upstream the mixing unit (202), adapted for converting the multi-band signal (102) down to a baseband.

5. The receiver device (100) according to claim 1 or any one of the above claims, wherein at least a part of the autocorrelation units (104) comprises an integrate and dump unit (208), particularly arranged downstream the delay unit (200) and downstream the mixing unit (202).

6. The receiver device (100) according to claim 1 or any one of the above claims, comprising a digital signal processing unit (110) arranged downstream the sampling stage (108) and adapted for separating the set of autocorrelation signals (106).

7. The receiver device (100) according to claim 6, wherein the digital signal processing unit (110) is adapted for processing the set of autocorrelation signals (106) by a linear signal processing scheme.

8. The receiver device (100) according to claim 6 or 7, wherein the digital signal processing unit (110) is adapted for orthogonalizing the set of autocorrelation signals (106).

9. The receiver device (100) according to claim 6 or any one of the above claims, wherein the digital signal processing unit (110) comprises a Fourier transformation section adapted for Fourier transforming the set of autocorrelation signals (106).

10. The receiver device (100) according to claim 9, wherein the Fourier transformation section is adapted for Fourier transforming a power density spectrum of the multi-band signal (102) from the set of autocorrelation signals (106).

11. A communication system (600), comprising

a sender device (602) adapted for transmitting a multi-band signal (102); and
a receiver device (100) of claim 1 or any one of the above claims for receiving and detecting the multi-band signal (102).

12. The communication system (600) according to claim 11, adapted as one of the group consisting of a sensor network, a wireless data communication system, and a USB data communication system.

13. A method of providing analog frontend processing of a multi-band signal (102) in the form of a multi-carrier signal which is a signal on multiple orthogonal, frequency division multiplexed carriers, the method comprising

receiving the multi-band signal (102) and supplying the received multi-band signal (102) to a bank of autocorrelation units (104);
separating the multi-band signal (102) into a set of autocorrelation signals (106) by performing an autocorrelation of the multi-band signal (102) by the bank of autocorrelation units (104);

sampling the set of autocorrelation signals (106) to thereby select individual signal components for detection, wherein the bank of autocorrelation units (104) is adapted as a non-coherent frontend receiver part;

wherein performing the autocorrelation of the multi-band signal (102) comprises in each of the correlation units:

delaying the multi-band signal (102) by a predefined delay time wherein the predefined delay time differs for different ones of the autocorrelation units (104);

mixing the delayed multi-band signal (204) with the undelayed multi-band signal (102);

wherein the number of orthogonal frequency carriers is N+1, and the number of autocorrelation units is at least (N+1)/2;

wherein the multi-carrier signal (102) is modulated by on/off key modulation or

wherein the multi-carrier signal (102) is modulated by pulse position modulation on parallel frequency carriers.

14. A program element of detecting a multi-band signal (102), which program element, when being executed by a processor (100), is adapted to carry out a method according to claim 13.

**Patentansprüche**

1. Eine Empfängervorrichtung (100) zum Bereitstellen eines analogen Frontend-Verarbeitens eines Multiband-Signals (102) in der Form eines Multi-Träger-Signals, welches ein Signal auf mehreren orthogonalen, Frequenzteilungsmultiplex-Trägern ist, wobei die Empfängervorrichtung (100) aufweist

eine Bank von Autokorrelationseinheiten (104), welche zum Separieren des Multiband-Signals (102) in ein Set von Autokorrelationssignalen (106) angepasst ist;

eine Multiband-Signal-Empfangseinheit (114), welche zum Empfangen des Multiband-Signals (102) und zum Bereitstellen des empfangenen Multiband-Signals (102) an die Bank von Autokorrelationseinheiten (104) angepasst ist;

eine Abtast-Stufe (108), welche der Bank von Autokorrelationseinheiten (104) nachgelagert angeordnet ist und zum Abtasten des Sets von Autokorrelationssignalen (106) angepasst ist, um dadurch individuelle Signalkomponenten für eine Detektion auszuwählen,

wobei die Bank von Autokorrelationseinheiten (104) als ein nichtkohärenter Frontend-Empfängerteil angepasst ist;

wobei jede der Autokorrelationseinheiten (104) aufweist

eine Verzögerungseinheit (200), welche zum Verzögern des Multiband-Signals (102) mittels einer vordefinierten Verzögerungszeit angepasst ist;

eine Mischereinheit (202), insbesondere eine Multiplikationseinheit, welche zum Mischen des verzögerten Multiband-Signals (204) mit dem unverzögerten Multiband-Signal (102) angepasst ist; und

wobei die vordefinierte Verzögerungszeit sich für unterschiedliche der Autokorrelationseinheiten (104) unterscheidet;

wobei die Anzahl der orthogonalen Frequenzträgern N+1 ist und die Anzahl der Autokorrelationseinheiten zumindest (N+1)/2 ist;

wobei das Multi-Trägersignal (102) mittels einer an/aus Schlüsselmodulation moduliert ist oder

wobei das Multi-Trägersignal (102) mittels einer Pulspositionsmodulation auf parallelen Frequenzträgern moduliert ist.

2. Die Empfängervorrichtung (100) gemäß Anspruch 1, welche zum Detektieren eines Ultra-Breitbandsignals angepasst ist.

3. Die Empfängervorrichtung (100) gemäß Anspruch 1 oder irgendeinem der obigen Ansprüche, wobei die Bank von Autokorrelationseinheiten (104) und die Abtaststufe (108) als eine Mehrzahl von Signalverarbeitungszweigen verbunden sind, welche parallel zueinander verbunden sind.

4. Die Empfängervorrichtung (100) gemäß Anspruch 1 oder irgendeinem der obigen Ansprüche, wobei zumindest ein Teil der Autokorrelationseinheiten (104) einen Frequenz-Abwärtskonverter (206) aufweist, welcher insbesondere der Verzögerungseinheit (200) vorgelagert und der Mischereinheit (202) vorgelagert angeordnet ist, welcher zum Konvertieren des Multi-Bandsignals (102) abwärts zu einem Basisband angepasst ist.

**5.** Die Empfängervorrichtung (100) gemäß Anspruch 1 oder irgendeinem der obigen Ansprüche, wobei zumindest ein Teil der Autokorrelationseinheiten (104) eine Integrate-and-Dump Einheit (208) aufweist, welche insbesondere der Verzögerungseinheit (200) nachgelagert und der Mischereinheit (202) nachgelagert angeordnet ist.

**6.** Die Empfängervorrichtung (100) gemäß Anspruch 1 oder irgendeinem der obigen Ansprüche, welche eine digitale Signalverarbeitungseinheit (110) aufweist, welche der Abtast-Stufe (108) nachgelagert angeordnet ist und welche zum Separieren des Sets von Autokorrelationssignalen (106) angepasst ist.

**7.** Die Empfängervorrichtung (100) gemäß Anspruch 6, wobei die digitale Signalverarbeitungseinheit (110) zum Verarbeiten des Sets von Autokorrelationssignalen (106) mittels eines linearen Signalsverarbeitungsschemas angepasst ist.

**8.** Die Empfängervorrichtung (100) gemäß Anspruch 6 oder 7, wobei die digitale Signalverarbeitungseinheit (110) zum Orthogonalisieren des Sets von Autokorrelationssignalen (106) angepasst ist.

**9.** Die Empfängervorrichtung (100) gemäß Anspruch 6 oder irgendeinem der obigen Ansprüche, wobei die digitale Signalverarbeitungseinheit (110) eine Fourier-Transformationssektion aufweist, welche zum Fourier-Transformieren des Sets von Autokorrelationssignalen (106) angepasst ist.

**10.** Die Empfängervorrichtung (100) gemäß Anspruch 9, wobei die Fourier-Transformationssektion zum Fourier-Transformieren eines Leistungsdichtespektrums des Multiband-Signals (102) aus dem Set von Autokorrelationssignalen (106) angepasst ist.

**11.** Ein Kommunikationssystem (600), welches aufweist

eine Sendervorrichtung (602), welche zum Senden eines Multiband-Signals (102) angepasst ist; und
eine Empfängervorrichtung (100) gemäß Anspruch 1 oder irgendeinem der obigen Ansprüche zum Empfangen und Detektieren des Multiband-Signals (102).

**12.** Das Kommunikationssystem (600) gemäß Anspruch 11, welches als eines aus der Gruppe bestehend aus einem Sensor-Netzwerk, einem drahtlosen Datenkommunikationssystem und einem USB Datenkommunikationssystem angepasst ist.

**13.** Ein Verfahren zum Bereitstellen eines analogen Frontend-Verarbeitens eines Multiband-Signals (102) in der Form eines Multi-Träger-Signals, welches ein Signal auf mehreren orthogonalen, Frequenzteilungsmultiplex-Trägern ist, wobei das Verfahren aufweist

Empfangen des Multiband-Signals (102) und Bereitstellen des empfangenen Multiband-Signals (102) an eine Bank von Autokorrelationseinheiten (104);
Separieren des Multiband-Signals (102) in ein Set von Autokorrelationssignalen (106) mittels Durchführens einer Autokorrelation des Multiband-Signals (102) mittels der Bank von Autokorrelationseinheiten (104);
Abtasten des Sets von Autokorrelationssignalen (106), um dadurch individuelle Signalkomponenten für eine Detektion auszuwählen,
wobei die Bank von Autokorrelationseinheiten (104) als ein nichtkohärenter Frontend-Empfängerteil angepasst ist;
wobei das Durchführen der Autokorrelation des Multiband-Signals (102) in jeder der Korrelationseinheiten (104) aufweist:

Verzögern des Multiband-Signals (102) mittels einer vordefinierten Verzögerungszeit, wobei die vordefinierte Verzögerungszeit sich für unterschiedliche der Autokorrelationseinheiten (104) unterscheidet;
Mischen des verzögerten Multiband-Signals (204) mit dem unverzögerten Multiband-Signal (102);
wobei die Anzahl der orthogonalen Frequenzträger N+1 ist und die Anzahl der Autokorrelationseinheiten zumindest (N+1)/2 ist;
wobei das Multi-Trägersignal (102) mittels einer an/aus Schlüsselmodulation moduliert ist oder
wobei das Multi-Trägersignal (102) mittels einer Pulspositionsmodulation auf parallelen Frequenzträgern moduliert ist.

**14.** Ein Programmelement zum Detektieren eines Multiband-Signals (102), welches Programmelement, wenn es mittels eines Prozessors (100) ausgeführt wird, angepasst ist, um ein Verfahren gemäß Anspruch 13 auszuführen.

**Revendications**

1.  Dispositif récepteur (100) servant au traitement frontal analogique d'un signal multi-bande (102) sous la forme d'un signal multiporteuses qui est un signal sur des porteuses multiples, orthogonales, multiplexées en fréquence, le dispositif récepteur (100) comprenant

    une banque (104) d'unités d'autocorrélation conçue pour séparer le signal multi-bande (102) en un ensemble de signaux (106) d'autocorrélation ;
    une unité (114) de réception du signal multi-bande conçue pour recevoir le signal multi-bande (102) et de fournir le signal multi-bande reçu (102) à la banque (104) d'unités d'autocorrélation ;
    une phase (108) d'échantillonnage agencée en aval de la banque d'unités (104) d'autocorrélation et conçue pour échantillonner l'ensemble de signaux (106) d'autocorrélation afin de sélectionner ainsi des composantes de signal individuelles pour une détection ;
    dans lequel la banque d'unités (104) d'autocorrélation est conçue comme une partie réceptrice frontale non cohérente ;
    dans lequel chacune des unités (104) d'autocorrélation comprend
    une unité (200) de retard conçue pour retarder le signal multi-bande (102) d'un temps de retard prédéterminé ;
    une unité (202) de mélange, particulièrement une unité de multiplication, conçue pour mélanger le signal multi-bande retardé (204) au signal multi-bande non retardé (102) ;
    et dans lequel le temps de retard prédéterminé diffère pour différentes unités (104) d'autocorrélation ;
    dans lequel le nombre de porteuses de fréquence orthogonales est N+1, et le nombre d'unités d'autocorrélation est au moins (N+1)/2 ;
    dans lequel le signal multiporteuses (102) est modulé par une modulation par touche marche/arrêt ou
    dans lequel le signal multiporteuses (102) est modulé par une modulation d'impulsions en position sur des porteuses de fréquence parallèles.

2.  Dispositif récepteur (100) selon la revendication 1 conçu pour détecter un signal ultra large bande.

3.  Dispositif récepteur (100) selon la revendication 1 ou l'une quelconque des revendications précédentes, dans lequel la banque (104) d'unités d'autocorrélation et la phase (108) d'échantillonnage sont connectées comme une pluralité de branches de traitement de signaux connectées en parallèle les unes aux autres.

4.  Dispositif récepteur (100) selon la revendication 1 ou l'une quelconque des revendications précédentes dans lequel au moins une partie des unités (104) d'autocorrélation comprend un convertisseur abaisseur (206) de fréquence, notamment agencé en amont de l'unité (200) de retard et en amont de l'unité (202) de mélange, conçu pour convertir le signal multi-bande (102) et l'abaisser en une bande de base.

5.  Dispositif récepteur (100) selon la revendication 1 ou l'une quelconque des revendications précédentes dans lequel au moins une partie des unités (104) d'autocorrélation comprend une unité de vidage intégrée (208), notamment agencée en aval de l'unité (200) de retard et en aval de l'unité (202) de mélange.

6.  Dispositif récepteur (100) selon la revendication 1 ou l'une quelconque des revendications précédentes comprenant une unité (110) de traitement de signaux numériques agencée en aval de la phase (108) d'échantillonnage et conçue pour séparer l'ensemble de signaux d'autocorrélation (106).

7.  Dispositif récepteur (100) selon la revendication 6,
    dans lequel l'unité (110) de traitement de signaux numériques est conçue pour le traitement de l'ensemble de signaux (106) d'autocorrélation par une méthode de traitement de signaux linéaire.

8.  Dispositif récepteur (100) selon la revendication 6 ou la revendication 7,
    dans lequel l'unité (110) de traitement de signaux numériques est conçue pour orthogonaliser l'ensemble des signaux d'autocorrélation (106).

9.  Dispositif récepteur (100) selon la revendication 6 ou l'une quelconque des revendications précédentes,
    dans lequel l'unité (110) de traitement de signaux numériques comprend une section de transformation de Fourier conçue pour réaliser la transformation de Fourier sur l'ensemble de signaux (106) d'autocorrélation.

10. Dispositif récepteur (100) selon la revendication 9,
dans lequel la section de transformation de Fourrier est conçue pour réaliser la transformation de Fourier sur un spectre de densité de puissance du signal multi-bande (102) à partir de l'ensemble de signaux (106) d'autocorrélation.

11. Système (600) de communication comprenant

   un dispositif émetteur (602) conçu pour transmettre un signal multi-bande (102) ; et
   un dispositif récepteur (100) selon la revendication 1 ou l'une quelconque des revendications précédentes pour recevoir et détecter le signal multi-bande (102).

12. Système (600) de communication selon la revendication 11,
conçu comme un groupe constitué d'un réseau de capteurs, d'un système de communication de données sans fil, et d'un système de communication de données USB.

13. Procédé servant au traitement frontal analogique d'un signal multi-bande (102) sous la forme d'un signal multiporteuses qui est un signal sur des porteuses multiples, orthogonales, multiplexées en fréquence, le procédé comprenant

   recevoir le signal multi-bande (102) et fournir le signal multi-bande (102) reçu à une banque (104) d'unités d'autocorrélation ;
   séparer le signal multi-bande (102) en un ensemble de signaux (106) d'autocorrélation en effectuant une autocorrélation du signal multi-bande (102) par la banque (104) d'unités d'autocorrélation ;
   échantillonner l'ensemble de signaux (106) d'autocorrélation afin de sélectionner ainsi des composantes de signal individuelles pour une détection,
   dans lequel la banque d'unités (104) d'autocorrélation est conçue comme une partie réceptrice frontale non cohérente ;
   dans lequel la réalisation de l'autocorrélation du signal multi-bande (102) comprend, dans chacune des unités de corrélation
   retarder le signal multi-bande (102) d'un temps de retard prédéterminé, le temps de retard prédéterminé étant différent pour différentes unités (104) d'autocorrélation ;
   mélanger le signal multi-bande retardé (204) au signal multi-bande non retardé (102) ;
   dans lequel le nombre de porteuses de fréquence orthogonales est N+1, et le nombre d'unités d'autocorrélation est au moins (N+1)/2 ;
   dans lequel le signal multiporteuses (102) est modulé par une modulation par touche marche/arrêt ou
   dans lequel le signal multiporteuses (102) est modulé par une modulation d'impulsions en position sur des porteuses de fréquence parallèles.

14. Élément de programme de détection d'un signal multi-bande (102), élément de programme qui, lorsqu'il est exécuté par un processeur (100), est conçu pour exécuter un procédé selon la revendication 13.

Fig.1

Fig.2

Fig.3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7099367 B
- US 20040202230 A
- US 20040242155 A
- EP 1303056 A

**Non-patent literature cited in the description**

- Energy detection under narrowband interference in UWB systems. INFORMATION, COMMUNICATIONS&SIGNAL PROCESSSING, 2007 6th International Conference. IEEE, 2007